Europäisches Patentamt

European Patent Office

Office européen des brevets

(11) Publication number: **0 361 246**
**A1**

## (12) EUROPEAN PATENT APPLICATION

(21) Application number: **89117175.3**

(22) Date of filing: **16.09.89**

(51) Int. Cl.⁵ **A01N 25/02 , A01N 31/12**

(30) Priority: **30.09.88 GB 8822967**

(43) Date of publication of application:
**04.04.90 Bulletin 90/14**

(84) Designated Contracting States:
**BE CH DE ES FR GB IT LI LU NL SE**

(71) Applicant: **MERCK PATENT GESELLSCHAFT MIT BESCHRÄNKTER HAFTUNG**
**Frankfurter Strasse 250 Postfach 4119**
**D-6100 Darmstadt(DE)**

(72) Inventor: **Monk, Derek Frederick, Dr.**
**Pencoed Furzehill**
**Wimborne Dorset(GB)**

(54) Biocidal composition.

(57) The invention relates to a biocidal composition in the form of an emulsion concentrate comprising dichlorophen and a method for the preparation of a biocidal emulsion by dilution of said composition with water.

EP 0 361 246 A1

## Biocidal composition

The invention relates to a biocidal composition in the form of an emulsion concentrate comprising dichlorophen and a method for the preparation of a biocidal emulsion by dilution of said composition with water.

Dichlorophen (5.5'-dichloro-2.2'-dihydroxydiphenylmethane) is a well established bactericide, algicide and fungicide and is also known as an effective moss-killer. To allow dichlorophen to be used e.g. for moss-killing it must be converted into a form suitable for this purpose. However, dichlorophen is extremely insoluble in water and when dichlorophen powder was used as a moss-killer in lawns rain was found to produce local areas of high concentrations which scorched the grass and other areas received no dichlorophen. Aqueous dispersions of dichlorophen tend to settle out on standing. On the other hand, the water soluble alkali metal salts of dichlorophen normally have a pH above 11 in the concentrate. From GB 1.027.104 it is known that these disadvantages can be circumvented by using dichlorophen or an alkali metal salt thereof in a mixture with sand. But also this mixture has some disadvantages, such as e.g. the high weight (more than 90 % sand), difficulty in obtaining an even application etc.

Aqueous solutions of dichlorophen salts have been used to protect e.g. adhesives, latices, cutting oils, drilling muds, etc. for many years. However, in some cases, the water content or alkalinity of these dichlorophen salt solutions is a disadvantage due to difficulty in blending into the product and the effect of the high pH on product stability, often even precluding its use.

Aqueous solutions of dichlorophen salts are e.g. widely used as surface biocides, in particular, the products find application in the horticultural industry. Although the products are extremely effective there can be problems by precipitation of dichlorophen in hard water and possible scale formation. The alkalinity of the neat product also presents a potential hazard to the operators.

Aqueous solutions of dichlorophen are commonly used to control infections in air-conditioning, water cooling and humidification systems. However, unless properly formulated, they can suffer from precipitation of dichlorophen and scale formation in hard-water and, because of their high pH, the neat product is corrosive and can present a hazard in handling.

It is an object of the present invention to provide an improved biocidal composition which ameliorates or overcomes the above mentioned problems.

Accordingly, the invention relates to biocidal compositions in the form of an emulsion concentrate comprising dichlorophen or an alkali metal salt thereof, an inert organic solvent, an anionic surfactant and, if desired, a base to produce a pH-value in the neutral region. In the preferred form of the present invention the composition contains between 1 and 50 % w w of dichlorophen or an alkali metal salt, such as the sodium or potassium salt thereof.

The emulsions according to the invention have a low water content and, if desired, a neutral pH and therefore blend readily into many formulations not previously compatible with dichlorophen or dichlorophen salts. The emulsions give similar results to known dichlorophen preparations but with a reduction in the potential hazards and the biocidal activity of dichlorophen in products containing the emulsion is unaffected.

Suitable inert organic solvents of the invention are dialkylethers such as dipropyl-, dibutyl-, dipentyl-, propylbutyl-, propylpentyl-, butylpentylether, preferably dibutylether; mono- or dialkyleneglycolmonoalkylethers such as dipropyleneglycolmonomethylether, butyl cellosolve or phenyl cellosolve, preferably dipropyleneglycolmonomethylether; alcohols such as hexanols, heptanols, octanols, nonanols, decanols and benzyl alcohol, preferably octanol; and hydrocarbons such as naphtha, toluene and/or xylene, preferably naphtha and xylene. The concentration of the inert organic solvent should be in the range of 20-50 % w/w.

Suitable anionic surfactants are alkylbenzenesulphonic acids or alkylsulphonic acids with 10 to 16 C-atoms in the alkyl chain or their alkali metal or amine salts, such as dodecylbenzenesulphonic acid and its sodium and triethanolamine salts, preferably dodecylbenzenesulphonic acid. The concentration of the sulphonic acid should be in the range of 20-35 % w/w.

In order to get a pH-value in the neutral region the emulsion concentrate can also contain an alkanolamine, such as mono-, di- and trialkanolamine wherein the alkanol is derived from methanol, ethanol, propanol, butanol, preferably triethanolamine. The emulsion concentrate of the invention contains about 5-20 % w/w of these compounds.

For the preparation of emulsions with suitable stability for moss-killing applications 1-5 % w/w of the emulsion concentrate is diluted with water for application to lawns, paths, roofs etc. The emulsion concentrate and its diluted product are safe to handle with a pH-value of around 7. The emulsion concentrate can be diluted with hard water without the risk of scale formation as with the alkaline salts. The composition can also be used to treat liverwort, algal patches and certain fungal diseases, to preserve adhesives, latices, cutting oils, drilling muds, to control infections in air-conditioning, water cooling and humidification systems and as surface biocides in the horticultural industry. It will also be possible to blend other water soluble or insoluble pesticides or herbicides into the emulsion concentrates according to the invention to provide a dual action product.

Example 1

An emulsion concentrate is prepared by mixing the following compounds (% w/w):
15,7 % dichlorophen
42,6 % dibutylether
29,2 % dodecylbenzenesulphonic acid
12,5 % triethanolamine
The microemulsion is prepared by diluting 5 % w/w of the emulsion concentrate in tap water.

Example 2

An emulsion concentrate is prepared by mixing the following compounds (% w/w):
50 % sodium dichlorophen solution (40 % w/w in water)
26,6 % dipropyleneglycolmonomethylether
23,4 % dodecylbenzenesulphonic acid
The emulsion is prepared by diluting 5 % w/w of the emulsion concentrate in tap water. 200 ml of this emulsion or 1 litre of a 1 % w/w emulsion are applied by watering can or pressure spray per square meter of a moss-infested lawn.

Example 3

To a proprietary cutting oil containing no biocide is added 3 % of the emulsion concentrate given in Example 2. The emulsion concentrate and oil are completely miscible and stable on storage. On dilution to working concentration (3 % w/w) in hard water, the emulsion resisted repeated challenges of approximately $10^7$ organisms/ml of oil of a mixed microflora isolated from contaminated cutting oils.

Example 4

Identical masonry blocks of a surface area of 0.125 $m^2$ are sprayed with a mixed bacterial and fungal inoculum of approximately $10^7$ colony forming units/ml. These areas are then allowed to air dry at 20 °C. One of the blocks is then treated by spraying with 10.5 ml of a 2.5 % w/w aqueous dilution of the emulsion concentrate given in Example 2. A second block is treated by spraying with sterile water. After 30 minutes the treated surfaces are wiped semi-dry and then allowed to air dry. Once the surfaces are fully dry, half of each area is sterile swabbed and the swabbings are plated onto blood agar base. The other halves are similarly treated but plated onto potato dextrose agar. All plates are then incubated at 30 °C.

No bacteria or fungi are recovered from the surface treated with the emulsion given in Example 2. The area treated with sterile water yield 52 bacterial colonies.

Example 5

The minimum inhibitory (MIC) and bactericidal concentrations (MBC) for Example 2 are compared to a solution of sodium dichlorophenate at the same dichlorophen concentration in the table below. They represent the maximum dilutions that will still inhibit or kill the particular bacteria after 48 hours contact at 37 °C.

| Organisms | Example 2 | | Sodium dichlorophenate (20 % w·w in water) | |
|---|---|---|---|---|
| | MIC | MBC | MIC | MBC |
| Staph. aureus | 1 250000 | 1 250000 | 1 250000 | 1 250000 |
| E. coli | 1·4000 | 1·4000 | 1 8000 | 1 8000 |
| Ps.aeruginosa | 1·800 | 1 800 | 1 1600 | 1 1600 |

## Claims

1. A biocidal composition in the form of an emulsion concentrate comprising dichlorophen or an alkali metal salt thereof, an inert organic solvent, an anionic surfactant and, if desired, an alkanolamine.

2. A composition as claimed in claim 1, wherein the concentration of dichlorophen or the alkali metal salt thereof is between 1 and 50 % w·w.

3. A composition as claimed in claim 1, wherein the inert organic solvent is a dialkylether, a mono-or dialkyleneglycolmonoalkylether, an alcohol and/or a hydrocarbon such as naphtha, toluene and/or xylene.

4. A composition as claimed in claim 1, wherein the anionic surfactant is an alkylbenzenesulphonic acid.

5. A method for the preparation of a biocidal emulsion by dilution of 1-5 % w·w of the composition of claim 1 with water.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL PATENTS INDEX, BASIC ABSTRACTS JOURNAL, section C AGDOC, Week 8629, 10th September 1986, abstract no. 86-186000/29, Derwent Publications Ltd, London, GB, & JP-A-86 118 301 (MITSUI PETROCHEM. IND. K.K.) 05-06-1986 * Abstract * | 1-5 | A 01 N 25/02 A 01 N 31/12 |
| X | CHEMICAL PATENTS INDEX, BASIC ABSTRACTS JOURNAL, section C AGDOC, Week 8445, 9th January 1985, abstract no. 84-282164/45, Derwent Publications Ltd, London, GB; & JP-A-82 06 162 (GOUWS & SCHEEPERS) 24-02-1984 * Abstract * | 1-5 | |
| X | GB-A-1 186 628 (B.D.H. CHEMICALS LTD) * Whole document * | 1-5 | |
| D,A | GB-A-1 027 104 (BRITISH DRUG HOUSES LTD) * Whole document * | 1-5 | TECHNICAL FIELDS SEARCHED (Int. Cl.5) A 01 N |

The present search report has been drawn up for all claims

| Place of search | Date of completion of the search | Examiner |
|---|---|---|
| THE HAGUE | 22-12-1989 | DONOVAN T.M. |

EPO FORM 1503 03.82 (P0401)